(19) Europäisches Patentamt
European Patent Office
Office européen des brevets

(11) **EP 3 733 729 A1**

(12) **EUROPEAN PATENT APPLICATION**

(43) Date of publication:
**04.11.2020 Bulletin 2020/45**

(21) Application number: **19172172.9**

(22) Date of filing: **02.05.2019**

(51) Int Cl.:
***C08G 18/76*** (2006.01) ***C08G 18/67*** (2006.01)
***C08G 18/42*** (2006.01) ***C08G 18/44*** (2006.01)
***C08G 18/48*** (2006.01) ***C08L 75/16*** (2006.01)
***C08J 5/04*** (2006.01) ***C08F 220/20*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventor: **The designation of the inventor has not yet been filed**

(74) Representative: **Levpat**
**c/o Covestro AG**
**Gebäude 4825**
**51365 Leverkusen (DE)**

(54) **METHOD FOR PREPARING A PULTRUDED POLYURETHANE COMPOSITE**

(57) The present invention relates to a method for preparing a pultruded polyurethane composite by a polyurethane pultrusion process, a pultruded polyurethane composite prepared by said method, and uses thereof. The method for preparing a pultruded polyurethane composite of the present invention employs short molds, improves production efficiency and saves costs.

Fig. 1

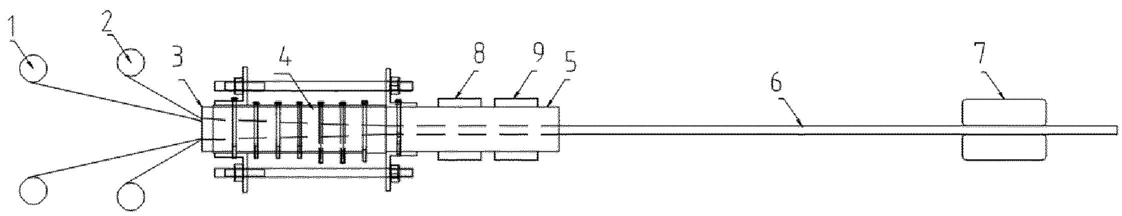




Printed by Jouve, 75001 PARIS (FR)

## Description

### Technical field

The present invention relates to the field of polyurethane pultrusion process. In particular, the present invention relates to a method for preparing a pultruded polyurethane composite by a polyurethane pultrusion process, a pultruded polyurethane composite prepared by said method, and uses thereof.

### Prior art

Pultruded composites have characteristics such as high fiber content and uniform quality, and are well concerned in the industry. The pultrusion process is simple and efficient, can be used continuously and thus is widely applied. A general specific operation mode of the pultrusion process is as follows. Fiber yarns or fiber fabrics are continuously taken out from a creel, and are impregnated with a resin by an open impregnation tank or a closed injection box. After the fibers are impregnated with the resin, they are fed into a mold which maintains a certain cross-sectional shape for thermal curing. Then the fibers are continuously pulled out of the mold by a drawing device. Finally they are cut into the required length in-line to obtain a corresponding composite.

Typically, the existing pultrusion processes employ relatively longe curing molds of typically 90 to 100 cm, or even longer. Relatively long molds are heavier, and too bulky especially for larger articles, which may lead to very long time for production preparations such as mold maintenance, threading and heating. At the same time, because the molds are relatively long and bulky, the energy consumption during heating is very high. So it is unfavorable for energy conservation, emission reduction and environment protection.

CN101341018B discloses a system (100) for producing a pultruded component (50). The system includes an impregnation die (150) for wetting yarns (110) of fiber with a polymeric resin precursor (141). The impregnation die (150) includes a first chamber (154) for coating external surfaces of the yarns (110) and a second chamber (156) for coating fibers within the yarns (110). The second chamber (156) has a cross-sectional area that decreases between an entrance to the second chamber (156) and an exit from the second chamber (156). The system (100) also includes a member (151) for spacing the yarns (110) apart prior to entering the first chamber (154) to allow the polymeric resin precursor (141) to flow around the external surfaces of the yarns (110).

CN106626445A discloses an integrated injection mold for polyurethane pultrusion and a method for utilizing the same. The integrated injection mold comprises a mold main body. The mold main body comprises a lower mold and an upper mold. Electric heating sheets are fixed to the left end of the mold main body, a material injection opening is formed on the top surface of the mold main body. A base plate, a supporting strip, a right end feeding supporting plate and a middle supporting plate are fixed to the right end of the mold main body. After the mold is erected, the two electric heating sheets start heating. Felt cloth is fed to the middle supporting plate through an feeding hole for inner-layer felt cloth. Glass fiber filaments are guided to the middle supporting plate through an inlet hole for glass fiber filaments. Then outer-layer felt cloth is guided to the middle supporting plate through a feeding hole for outer-layer felt cloth, which is in the periphery of the inlet hole for glass fiber filaments. During the forward movement, a polyurethane matrix starts to be injected through the material injection opening. In order to avoid coagulation by heat of the polyurethane matrix, a cooling zone is especially arranged on the left side of the material injection opening. After the resin matrix, the felt cloth and glass fiber bundles are fully bonded, coagulation by warming is conducted at the left end of the mold main body.

CN101312999B discloses a resin precursor composition for producing composite components. The composition comprises an isocyanate component comprising a material selected from the group consisting of diphenylmethane diisocyanate, a polymeric isomer of diphenylmethane diisocyanate, and mixtures thereof. The resin precursor composition also comprises at least one polyether polyol having a functionality of 3 in such an amount that the stoichiometric ratio of the isocyanate component to the at least one polyether polyol is between approximately 80% and 115%. The resin precursor composition also comprises a mold releasing material and a filler.

Despite the above disclosures, there is an urgent need for improved methods and molds to improve production efficiency and to meet the requirements of energy conservation, emission reduction and environment protection.

### Summary of the invention

One aspect of the present invention provides a method for preparing a pultruded polyurethane composite by a polyurethane pultrusion process, comprising the steps of: impregnating a fiber reinforcing material with a polyurethane composition comprising the following components:

a component A, including one or more organic polyisocyanates;
a component B, including:

b1) one or more organic polyols in an amount of 21 to 60 wt%, preferably 21 to 40 wt%, based on the total weight of the polyurethane composition as 100 wt%;
b2) one or more compounds having a structure of formula (I)

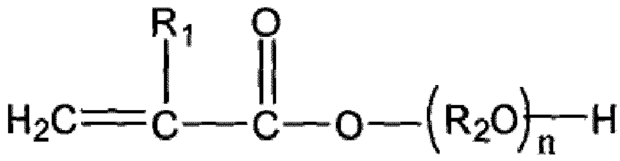

I

wherein R1 is selected from the group consisting of hydrogen, methyl or ethyl; R2 is selected from the group consisting of an alkylene group having 2 to 6 carbon atoms, 2,2-di(4-phenylene)-propane, 1,4-di(methylene)benzene, 1,3-di(methylene)benzene, 1,2-di(methylene)benzene; n is an integer selected from 1 to 6; and

a component C, free radical initiator;

drawing the impregnated fiber reinforcing material at a speed of 0.2 to 2 m/min, preferably 0.4 to 1.5 m/min through a mold having a length of 21 to 55 cm, preferably 25 to 55 cm, more preferably 30 to 50 cm and a controlled temperature of 110 to 230°C, preferably 150 to 220°C, curing to form the pultruded polyurethane composite.

Preferably, the polyurethane resin is prepared under a reaction condition in which the polyurethane composition is simultaneously subjected to a free radical polymerization reaction and a poly addition reaction of isocyanate groups and hydroxyl groups.

Preferably, b1) is selected from the group consisting of organic polyols, wherein said organic polyols have a functionality of 1.7 to 6, preferably 1.9 to 4.5 and a hydroxyl value of 150 to 1100 mg KOH/g, preferably 150 to 550 mg KOH/g.

Preferably, the component b2) is selected from the group consisting of hydroxyethyl methacrylate, hydroxypropyl methacrylate, hydroxybutyl methacrylate, hydroxyethyl acrylate, hydroxypropyl acrylate, hydroxybutyl acrylate or combinations thereof. Preferably, b2) is present in an amount of 4.6 to 33 wt%, based on the total weight of the polyurethane composition as 100 wt%.

Preferably, the fiber reinforcing material is selected from the group consisting of glass fiber, carbon fiber, polyester fiber, natural fiber, aramid fiber, nylon fiber, basalt fiber, boron fiber, silicon carbide fiber, asbestos fiber, whisker, hard particle, metal fiber or combinations thereof.

Preferably, the free radical initiator used in the present invention may be added to the polyol component or the isocyanate component, or separately added to the aforementioned two components. The free radical initiator includes, but is not limited to, a peroxide, a persulfide, a peroxycarbonate, a peroxyboric acid, an azo compound, or other suitable free radical initiators that can initiate curing of double bond-containing compounds. Examples thereof include tert-butyl peroxy-isopropylcarbonate, tert-butyl peroxy-3,5,5-trimethylhexanoate, methyl ethyl ketone peroxide, and cumyl hydroperoxide.

Preferably, the polyurethane composition has a curing time of 10 to 120 seconds, preferably 15 to 90 seconds, at 150 to 220°C.

Preferably, the polyurethane composition has a gel time of 15 to 90 minutes, preferably 20 to 60 minutes, at room temperature.

Preferably, the impregnating is carried out in an impregnation device comprising an injection box and an open impregnation tank.

Preferably, the injection pressure in the injection box is 0.1 to 15 bar, preferably 0.1 to 10 bar.

It is well known to those skilled in the art that the molds for polyurethane compositions (without component b2) of the present invention and the component free radical initiator) which is conventionally used in the pultrusion process in the prior art has a length generally from 90 to 100 cm. The mold of the present invention can be shortened by 45% to 76.7%, preferably 45% to 72.2%, more preferably 50% to 66.7% (calculated based on the longest/shortest molds of the prior art described above) compared to the molds commonly used in the prior art.

Through repeated experiments, we have unexpectedly discovered that the method of the present invention for preparing a pultruded polyurethane composite by a polyurethane pultrusion process shortens the length of molds, improves the production efficiency of the pultrusion process, meanwhile saves raw materials and manufactures a pultruded polyurethane composite of satisfactory quality.

Another aspect of the present invention provides a pultruded polyurethane composite prepared by a method for preparing a polyurethane composite by a polyurethane pultrusion process. The pultruded polyurethane composite is prepared by reaction of a polyurethane composition comprising the following components:

a component A, including one or more polyisocyanates;
a component B, including:

b1) one or more polyols in an amount of 21 to 60 wt%, preferably 21 to 40 wt%, based on the total weight of the polyurethane composition as 100 wt%;
b2) one or more compounds having a structure of formula (I)

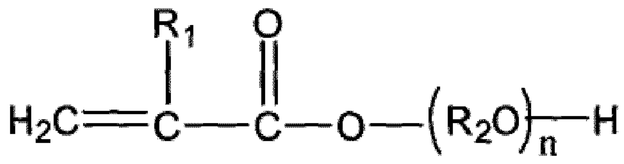

I

wherein R1 is selected from the group consisting of hydrogen, methyl or ethyl; R2 is selected from the group consisting of an alkylene group having 2 to 6 carbon atoms, 2,2-di(4-phenylene)-propane, 1,4-di(methylene)benzene, 1,3-di(methylene)benzene, 1,2-di(methylene)benzene; n is an integer selected from 1 to 6; and

a component C, including free radical initiator.

Preferably, the polyurethane resin is prepared under a reaction condition in which the polyurethane composition is simultaneously subjected to a free radical polymerization reaction and a polyaddition reaction of isocyanate groups and hydroxyl groups.

Preferably, b1) is selected from the group consisting of organic polyols, wherein said organic polyols have a functionality of 1.7 to 6, preferably 1.9 to 4.5 and a hydroxyl value of 150 to 1100 mg KOH/g, preferably 150 to 550 mg KOH/g.

Preferably, b2) is present in an amount of 4.6 to 33 wt%, based on the total weight of the polyurethane composition as 100 wt%.

Preferably, the polyurethane composition has a curing time of 10 to 120 seconds, preferably 15 to 90 seconds, at 150 to 220°C.

Preferably, the polyurethane composition has a gel time of 15 to 90 minutes, preferably 20 to 60 minutes, at room temperature.

Still another aspect of the present invention provides a polyurethane product comprising the pultruded polyurethane composite obtained by the method for preparing a polyurethane composite by a polyurethane pultrusion process of the present invention.

Preferably, the polyurethane product of the present invention may be selected from the group consisting of cable trays, curtain wall frames for doors and windows, ladder frames, tent poles or tubes, anti-glare panels, floors, sucker rods, electric poles and crossarms, guardrails, grids, profiles for construction, profiles and plates for container, bicycle frames, fishing rods, cable cores, insulator core rods, radomes, single or sandwich continuous plates or spar caps for wind turbine blades.

The method for preparing a polyurethane composite by a polyurethane pultrusion process of the present invention employs the foregoing polyurethane composition, and designs a suitable mold for it skillfully, and improves the production efficiency of the pultruded polyurethane composite and saves costs in an appropriate way. Shorter molds mean smaller weight, especially for larger products. The reduced weight of molds allows saving a lot of time for production preparations such as mold maintenance, threading and heating. At the same time, because the molds are shorter and lighter, the energy consumption during heating is low, which is very conducive to energy saving, emission reduction and environment protection. In addition, due to the shorter molds, not only the costs for manufacture and maintenance of the molds can be greatly reduced, but also the loss of raw materials of the polyurethane composite can be lowered.

Moreover, the polyurethane composition of the present invention has a longer gel time and can achieve better polyurethane pultrusion. The polyurethane composite of the present invention has excellent physical properties and high glass fiber content.

In addition, the polyurethane composition of the present invention has a shorter curing time and a longer gel time, and can be better and more flexibly suitable for producing pultruded polyurethane composites, especially large pultruded polyurethane composites (for example, it can be impregnated and formed for longer time). Specifically, the fiber reinforcing materials can be better impregnated and formed for a longer period of time at room temperature, such as before entering the mold. At high temperature, such as after entering the mold, it can be cured more quickly.

**Embodiments**

Specific embodiments for carrying out the present invention are described below.

According to a first aspect of the present invention, a method for preparing a pultruded polyurethane composite by a polyurethane pultrusion process is provided, comprises the steps of:

impregnating a fiber reinforcing material with a polyurethane composition comprising the following components:

a component A, including one or more organic polyisocyanates;
a component B, including:

b1) one or more organic polyols in an amount of 21 to 60 wt%, preferably 21 to 40 wt%, based on the total weight of the polyurethane composition as 100 wt%;
b2) one or more compounds having a structure of formula (I)

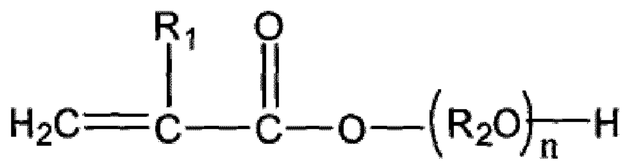

I

wherein R1 is selected from the group consisting of hydrogen, methyl or ethyl; R2 is selected from the group consisting of an alkylene group having 2 to 6 carbon atoms, 2,2-di(4-phenylene)-propane, 1,4-di(methylene)benzene, 1,3-di(methylene)benzene, 1,2-di(methylene)benzene; n is an integer selected from 1 to 6; and

a component C, free radical initiator;

drawing the impregnated fiber reinforcing material at a speed of 0.2 to 2 m/min, preferably 0.4 to 1.5 m/min through a mold having a length of 21 to 55 cm, preferably 25 to 55 cm, more preferably 30 to 50 cm and a controlled temperature of 110 to 230°C, preferably 150 to 220°C, curing to form the pultruded polyurethane composite.

Preferably, the polyurethane resin is prepared under a reaction condition in which the polyurethane composition is simultaneously subjected to a free radical polymerization reaction and a poly addition reaction of isocyanate groups and hydroxyl groups.

Preferably, b1) is selected from the group consisting of organic polyols, wherein said organic polyols have a functionality of 1.7 to 6, preferably 1.9 to 4.5 and a hydroxyl value of 150 to 1100 mg KOH/g, preferably 150 to 550 mg KOH/g.

Preferably, b2) is present in an amount of 4.6 to 33 wt%, based on the total weight of the polyurethane composition as 100 wt%.

Optionally, the reinforcing material is selected from the group consisting of fiber reinforcing materials, carbon nanotubes, hard particles, or combinations thereof, more preferably fiber reinforcing materials. The reinforcing material has a weight content of 60 to 90 wt%, preferably 75 to 85 wt%, based on the total weight of the polyurethane composite as 100 wt%.

When a fiber reinforcing material is used in the present invention, there is no requirements on its shape and size. For example, it may be a continuous fiber, a fiber web formed by bonding, or a fiber fabric.

In some embodiments of the present invention, the fiber reinforcing material is selected from the group consisting of glass fiber, carbon fiber, polyester fiber, natural fiber, aramid fiber, nylon fiber, basalt fiber, boron fiber, silicon carbide

fiber, asbestos fiber, whisker, metal fiber or combinations thereof.

Optionally, the organic polyisocyanate can be any aliphatic, cycloaliphatic or aromatic isocyanate known for use in the preparation of polyurethanes. Examples thereof include, but are not limited to, toluene diisocyanate (TDI), diphenylmethane diisocyanate (MDI), polyphenyl polymethylene polyisocyanate (pMDI), 1,5-naphthalene diisocyanate (NDI), hexamethylene diisocyanate (HDI), methylcyclohexyl diisocyanate (TDI), 4,4'-dicyclohexylmethane diisocyanate, isophorone diisocyanate (IPDI), p-phenylene diisocyanate (PPDI), p-xylene diisocyanate (XDI), tetramethylxylene diisocyanate (TMXDI), and their multimers or combinations thereof. The isocyanate useful in the present invention has preferably a functionality of 2.0 to 3.5, particularly preferably 2.1 to 2.9. The isocyanate has preferably a viscosity of 5 to 700 mPa·s, particularly preferably of 10 to 300 mPa·s, measured at 25 °C according to DIN 53019-1-3.

When used in the present invention, organic polyisocyanates include isocyanate dimers, trimers, tetramers, pentamers or combinations thereof.

In a preferred embodiment of the present invention, the isocyanate component A is selected from the group consisting of diphenylmethane diisocyanate (MDI), polyphenyl polymethylene polyisocyanate (pMDI), and their multimers, prepolymers, or combinations thereof.

The blocked isocyanate can also be used as the isocyanate component A, which can be prepared by reacting an excess of an organic polyisocyanate or a mixture thereof with a polyol compound. These compounds and preparation methods thereof are well known to those skilled in the art.

The polyurethane composition of the present invention comprises one or more organic polyols b1). The organic polyol is present in an amount of from 21 to 60 wt%, based on the total weight of the polyurethane composition as 100 wt%. The organic polyol may be an organic polyol commonly used in the art for preparing polyurethanes, including but not limited to polyether polyols, polyether carbonate polyols, polyester polyols, polycarbonate diols, polymeric polyols, vegetable oil-based polyols or combinations thereof.

The polyether polyol can be prepared by a known process, for example, by reacting an olefin oxide with an initiator in the presence of a catalyst. The catalyst is preferably, but not limited to, a basic hydroxide, a basic alkoxide, antimony pentachloride, boron fluoride etherate, or a mixture thereof. The olefin oxide is preferably, but not limited to, tetrahydrofuran, ethylene oxide, propylene oxide, 1,2-butylene oxide, 2,3-butylene oxide, styrene oxide, or a mixture thereof, particularly preferably ethylene oxide and/or propylene oxide. The initiator is preferably, but not limited to, a polyhydroxy compound or a polyamino compound. Said polyhydroxy compound is preferably, but not limited to, water, ethylene glycol, 1,2-propanediol, 1,3-propanediol, diethylene glycol, trimethylolpropane, glycerol, bisphenol A, bisphenol S or a mixture thereof. Said polyamino compound is preferably, but not limited to, ethylene diamine, propylene diamine, butane diamine, hexane diamine, diethylenetriamine, toluene diamine or a mixture thereof.

The polyether carbonate polyols can also be used in the present invention. They can be prepared by adding carbon dioxide and an alkylene oxide onto a starter comprising active hydrogen by using a double metal cyanide catalyst.

The polyester polyol is obtained by reacting a dicarboxylic acid or a dicarboxylic acid anhydride with a polyol. Said dicarboxylic acid is preferably, but not limited to, an aliphatic carboxylic acid having 2 to 12 carbon atoms. Said aliphatic carboxylic acid having 2 to 12 carbon atoms is preferably, but not limited to, succinic acid, malonic acid, glutaric acid, adipic acid, suberic acid, azelaic acid, sebacic acid, dodecyl carboxylic acid, maleic acid, fumaric acid, phthalic acid, isophthalic acid, terephthalic acid, or a mixture thereof. Said dicarboxylic acid anhydride is preferably, but not limited to, phthalic anhydride, tetrachlorophthalic anhydride, maleic anhydride, or a mixture thereof. Said polyol, which is reacted with a dicarboxylic acid or a dicarboxylic acid anhydride, is preferably but not limited to ethylene glycol, diethylene glycol, 1,2-propanediol, 1,3-propanediol, dipropylene glycol, 1,3-methyl propylene glycol, 1,4-butanediol, 1,5-pentanediol, 1,6-hexanediol, neopentyl glycol, 1,10-nonanediol, glycerol, trimethylolpropane, or a mixture thereof. The polyester polyol further includes a polyester polyol prepared from a lactone. Said polyester polyol prepared from a lactone is preferably, but not limited to, ε-caprolactone. Preferably, the polyester polyol has a molecular weight of 200 to 3000 and a functionality of 2 to 6, preferably 2 to 5, more preferably 2 to 4.

The polycarbonate diol can be prepared by reacting a diol with a dihydrocarbyl carbonate or a diaryl carbonate or phosgene. Said diol is preferably, but not limited to, 1,2-propanediol, 1,3-propanediol, 1,4-butanediol, 1,5-pentanediol, 1,6-hexanediol, diethylene glycol, trioxymethylene diol, or a mixture thereof. Said dihydrocarbyl carbonate or diaryl carbonate is preferably, but not limited to, diphenyl carbonate.

The polymeric polyol may be a polymer modified polyether polyol, preferably a grafted polyether polyol, a polyether polyol dispersion. Said grafted polyether polyol is preferably a grafted polyether polyol based on styrene and/or acrylonitrile. Said styrene and/or acrylonitrile may be obtained by in situ polymerizing styrene, acrylonitrile, a mixture of styrene and acrylonitrile. The ratio of styrene to acrylonitrile in the mixture of styrene and acrylonitrile is 90:10 to 10:90, preferably 70:30 to 30:70. The polymeric polyol of the present invention may also be a bio-based polyol such as castor oil or wood tar. Said polymeric polyether polyol dispersion comprises a dispersed phase, for example, an inorganic filler, a polyurea, a polyhydrazide, a polyurethane containing a tertiary amino group in a bonded form and/or melamine. The amount of the dispersed phase is 1 to 50 wt%, preferably 1 to 45 wt%, based on the weight of the polymeric polyether polyol as 100 wt%. Preferably, the polymeric polyether polyol has a polymer solid content of 20% to 45%, based on the

weight of the polymeric polyether as 100%, and a hydroxyl value of 20 to 50 mg KOH/g.

When used in the present invention, vegetable oil-based polyols include vegetable oils, vegetable oil polyols or modified products thereof. Vegetable oils are compounds prepared from an unsaturated fatty acid and glycerol, or oils extracted from fruits, seeds and germs of plants, preferably but not limited to peanut oil, soybean oil, linseed oil, castor oil, rapeseed oil, palm oil. Said vegetable oil polyol is a polyol starting from one or more vegetable oils. Starters for synthesing the vegetable oil polyol include, but are not limited to, soybean oil, palm oil, peanut oil, rapeseed oil with low erucic acid and castor oil. Hydroxyl groups can be introduced into the starters of the vegetable oil polyol by a process such as cracking, oxidation or transesterification. Hereafter, the corresponding vegetable oil polyols can be prepared by a process for preparing an organic polyol well known to those skilled in the art.

Methods for measuring the hydroxyl value are well known to those skilled in the art and are disclosed, for example, in Houben Weyl, Methoden der Organischen Chemie, vol. XIV/2 Makromolekulare Stoffe, p. 17, Georg Thieme Verlag; Stuttgart 1963. The entire contents of this document are incorporated herein by reference.

As used herein, unless otherwise indicated, the functionality and hydroxyl value of an organic polyol refer to the average functionality and the average hydroxyl value respectively.

Optionally, the polyurethane composition of the present invention further comprises one or more compounds b2) having a structure of formula (I)

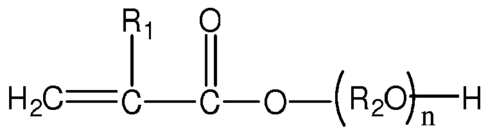

I ,

wherein $R_1$ is selected from the group consisting of hydrogen, methyl or ethyl; $R_2$ is selected from the group consisting of an alkylene group having 2 to 6 carbon atoms; and n is an integer selected from 1 to 6.

In a preferred embodiment of the present invention, $R_2$ is selected from the group consisting of ethylene, propylene, butylene, pentylene, 1-methyl-1,2-ethylene, 2-methyl-1,2-ethylene, 1-ethyl-1,2-ethylene, 2-ethyl-1,2-ethylene, 1-methyl-1,3-propylene, 2-methyl-1,3-propylene, 3-methyl-1,3-propylene, 1-ethyl-1,3-propylene, 2-ethyl-1,3-propylene, 3-ethyl-1,3-propylene, 1-methyl-1,4-butylene, 2-methyl-1,4-butylene, 3-methyl-1,4-butylene and 4-methyl-1,4-butylene, 2,2-di(4-phenylene)-propane, 1,4-dimethylenebenzene, 1,3-dimethylenebenzene, 1,2-dimethylenebenzene.

Preferably, b1) is selected from the group consisting of organic polyols, wherein said organic polyols have a functionality of 1.7 to 6, preferably 1.9 to 4.5 and a hydroxyl value of 150 to 1100 mg KOH/g, preferably 150 to 550 mg KOH/g.

In a preferred embodiment of the present invention, the component b2) is selected from the group consisting of hydroxyethyl methacrylate, hydroxypropyl methacrylate, hydroxybutyl methacrylate, hydroxyethyl acrylate, hydroxypropyl acrylate, hydroxybutyl acrylate or combinations thereof.

The compound of formula (I) can be prepared by a method generally used in the art, for example, by esterification reaction of (meth)acrylic anhydride or (meth)acrylic acid, (meth)acryloyl halide compound with $HO-(R_2O)_n-H$. The preparation methods are well known to those skilled in the art, for example, in "Handbook of Polyurethane Raw Materials and Auxiliaries" (Liu Yijun, published on April 1, 2005), Chapter 3; "Polyurethane Elastomer" (Liu Houzhen, published in August 2012), Chapter 2, the entire contents of which are incorporated herein by reference.

The polyurethane composition of the present invention further comprises C, free radical reaction initiator. The free radical initiator used in the present invention may be added to the polyol component or the isocyanate component or both components. Said initiator includes, but is not limited to, a peroxide, a persulfide, a peroxycarbonate, a peroxyboric acid, an azo compound, or other suitable free radical initiators that can initiate curing of double bond-containing compounds. Examples thereof include tert-butyl peroxy-isopropylcarbonate, tert-butyl peroxy-3,5,5-trimethylhexanoate, methyl ethyl ketone peroxide, and cumyl hydroperoxide. Preferably, the free radical reaction initiator of the present invention is present in an amount of 0.1 to 8 wt%, based on the total weight of the polyurethane composition of the present invention as 100 wt%. In addition, an accelerator such as a cobalt compound or an amine compound may also be present.

Optionally, the polyurethane composition may also comprise a catalyst for catalyzing the reaction of isocyanate groups (NCO) with hydroxyl groups (OH). Suitable catalysts for the polyurethane reaction are preferably, but not limited to, amine catalysts, organometallic catalysts, or mixtures thereof. Said amine catalyst is preferably, but not limited to, triethylamine, tributylamine, triethylenediamine, N-ethylmorpholine, N,N,N',N'-tetramethyl-ethylenediamine, pentamethyldiethylenetriamine, N,N-methylaniline, N,N-dimethylaniline, or a mixture thereof. Said organometallic catalyst is preferably, but not limited to, an organotin compound such as tin (II) acetate, tin (II) octoate, tin ethylhexanoate, tin laurate, dibutyl tin oxide, dibutyl tin dichloride, dibutyl tin diacetate, dibutyl tin maleate, dioctyl tin diacetate, or a mixture thereof.

Preferably, said catalyst is used in an amount of 0.001 to 10 wt%, based on the total weight of the polyurethane composition of the present invention as 100 wt%.

In an embodiment of the present invention, in the polyaddition reaction of isocyanate groups and hydroxyl groups, the isocyanate groups may be those present in the organic polyisocyanate (component A), or may also be those present in the reaction intermediate of the organic polyisocyanate (component A) with the organic polyol (component b1)) or the component b2). The hydroxyl groups may be those present in the organic polyol (component b1)) or the component b2), or may also be those present in the reaction intermediate of the organic polyisocyanate (component A) with the organic polyol (component b1)) or the component b2).

In an embodiment of the present invention, the free radical polymerization reaction is a poly addition reaction of olefinic bonds, wherein the olefinic bonds may be those present in the component b2) or may also be those present in the reaction intermediate of component b2) with the organic polyisocyanate.

In an embodiment of the present invention, the polyurethane polyaddition reaction (i.e., the polyaddition reaction of isocyanate groups and hydroxyl groups) is carried out simultaneously with the free radical polymerization reaction. It is well known to those skilled in the art that suitable reaction conditions can be selected so that the polyurethane polyaddition reaction and the free radical polymerization reaction are carried out successively. However, the polyurethane matrix thus obtained and the polyurethane resin matrix obtained in a method in which the polyurethane polyaddition reaction and the free radical polymerization reaction are simultaneously carried out are different in terms of the structure. Therefore, the prepared polyurethane composites are different in terms of mechanical properties and processability.

Optionally, the above polyurethane composition may further comprise an auxiliary or an additive, including but not limited to a filler, an internal mold releasing agent, a flame retardant, a smoke suppressant, a dye, a pigment, an antistatic agent, an antioxidant, a UV stabilization, a diluent, a defoaming agent, a coupling agent, a surface wetting agent, a leveling agent, a water scavenger, a catalyst, a molecular sieve, a thixotropic agent, a plasticizer, a foaming agent, a foam stabilizer, a foam homogenizing agent, an inhibitor for free radical reaction or a combination thereof. These components may optionally be included in the isocyanate component A) and/or the polyurethane composition B) of the present invention. These components may also be stored separately as a component D), which is mixed with the isocyanate component A) and/or the polyurethane composition B) of the present invention and then used for the preparation of polyurethane composites.

In some embodiments of the present invention, the filler is selected from the group consisting of aluminum hydroxide, bentonite, pulverous coal, wollastonite, perlite powder, floating bead, calcium carbonate, talcum powder, mica powder, china clay, fumed silica, expandable microsphere, diatomaceous earth, volcanic ash, barium sulfate, calcium sulfate, glass microsphere, stone powder, wood powder, wood chips, bamboo powder, bamboo chips, rice grains, straw chips, sorghum stalk chips, graphite powder, metal powder, recycled powder of thermoset composite, plastic granules or powder or a combination thereof. Said glass microsphere may be solid or hollow.

The internal mold releasing agent which can be used in the present invention includes any conventional mold releasing agent for producing polyurethanes. Examples thereof include long-chain carboxylic acids, especially fatty acids such as stearic acid, amines of long-chain carboxylic acids such as stearamide, fatty acid esters, metal salts of long-chain carboxylic acids such as zinc stearate, or polysiloxane.

Examples of the flame retardant which can be used in the present invention include triaryl phosphate, trialkyl phosphate, halogen-containing triaryl phosphate or trialkyl phosphate, melamine, melamine resin, halogenated paraffin, red phosphorus or combinations thereof.

Other auxiliaries which can be used in the present invention include a water scavenger such as a molecular sieve; a defoaming agent such as polydimethylsiloxane; a coupling agent such as monoethylene oxide or organoamine functionalized trialkoxysilane or combinations thereof. The coupling agent is particularly preferably used to increase the adhesion of the resin matrix to the fiber reinforcing materials. Fine particulate fillers, such as clay and fumed silica, are often used as the thixotropic agent.

The inhibitor for free radical reaction which can be used in the present invention includes a polymerization inhibitor and a polymerization retarder, and the like, for example, certain phenols, quinone compounds or hindered amine compounds. Examples thereof include methyl hydroquinone, p-methoxyphenol, benzoquinone, polymethyl pyridine derivatives, copper ions with low valence state, and the like.

Preferably, the polyurethane composition of the present invention has a curing time of 10 to 120 seconds, preferably 15 to 90 seconds, at 150 to 220°C.

Preferably, the polyurethane composition of the present invention has a gel time of 15 to 90 minutes, preferably 20 to 60 minutes at room temperature. In general, the term "gel time" means a period of time that begins when the component A and the component B of the reaction system start to mix and ends when the viscosity reaches a certain value (for example, about 10000 mPa·s). The gel time mentioned in the embodiments of the present invention is measured using a gel time tester.

Preferably, the impregnating of the present invention is carried out in an impregnation device comprising an injection box and an open impregnation tank.

Preferably, the injection pressure in the injection box is 0.1 to 15 bar, preferably 0.1 to 10 bar.

As described above, the molds of polyurethane compositions (without the component b2) of the present invention and the component free radical initiator) which is conventionally used in the pultrusion process in the prior art has a length generally from 90 to 100 cm. The molds of the present invention can be shortened by 45% to 76.7%, preferably 45% to 72.2%, more preferably 50% to 66.7% (calculated based on the longest/shortest molds of the prior art described above) compared to the molds commonly used in the prior art.

Through repeated experiments, we have unexpectedly discovered that the method for preparing a pultruded polyurethane composite by a polyurethane pultrusion process of the present invention shortens the length of the molds, improves the production efficiency of the pultrusion process, meanwhile saves raw materials and manufactures a pultruded polyurethane composite of satisfactory quality.

In addition, the polyurethane composition of the present invention has a shorter curing time and a longer gel time, and can be better and more flexibly suitable for producing pultruded polyurethane composites, especially large pultruded polyurethane composites (for example, it can be impregnated and formed for longer time). Specifically, the fiber reinforcing materials can be better impregnated and formed for a longer period of time at room temperature, such as before entering the mold. At high temperature, such as after entering the mold, it can be cured more quickly.

Another aspect of the present invention provides a pultruded polyurethane composite obtained by a method for preparing a polyurethane composite by a polyurethane pultrusion process. The pultruded polyurethane composite is prepared by reaction of a polyurethane composition comprising the following components:

a component A, including one or more organic polyisocyanates;

a component B, including:

b1) one or more organic polyols in an amount of 21 to 60 wt%, preferably 21 to 40 wt%, based on the total weight of the polyurethane composition as 100 wt%;

b2) one or more compounds having a structure of formula (I)

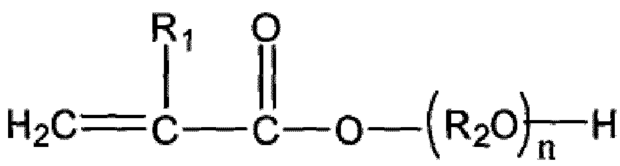

I

wherein R1 is selected from the group consisting of hydrogen, methyl or ethyl; R2 is selected from the group consisting of an alkylene group having 2 to 6 carbon atoms, 2,2-di(4-phenylene)-propane, 1,4-di(methylene)benzene, 1,3-di(methylene)benzene, 1,2-di(methylene)benzene; n is an integer selected from 1 to 6; and

a component C, free radical initiator.

Preferably, the polyurethane resin is prepared under a reaction condition in which the polyurethane composition is simultaneously subjected to a free radical polymerization reaction and a poly addition reaction of isocyanate groups and hydroxyl groups.

Preferably, b1) is selected from the group consisting of organic polyols, wherein said organic polyols have a functionality of 1.7 to 6, preferably 1.9 to 4.5 and a hydroxyl value of 150 to 1100 mg KOH/g, preferably 150 to 550 mg KOH/g.

Preferably, b2) is present in an amount of 4.6 to 33 wt%, based on the total weight of the polyurethane composition as 100 wt%.

Preferably, the polyurethane composition has a curing time of 10 to 120 seconds, preferably 15 to 90 seconds, at 150 to 220°C.

Preferably, the polyurethane composition has a gel time of 15 to 90 minutes, preferably 20 to 60 minutes, at room temperature.

Still another aspect of the invention provides a polyurethane product. The polyurethane product comprises the pultruded polyurethane composite obtained by the method for preparing a polyurethane composite by a polyurethane pultrusion process of the present invention.

Preferably, the polyurethane product of the present invention may be selected from the group consisting of

cable trays, curtain wall frames for doors and windows, ladder frames, tent poles or tubes, anti-glare panels, floors, sucker rods, electric poles and crossarms, guardrails, grids, profiles for construction, profiles and plates for container, bicycle frames, fishing rods, cable cores, insulator core rods, radomes, single or sandwich continuous plates or spar caps for wind turbine blades.

Unless defined otherwise, all technical and scientific terms used herein have the same meaning as they are generally understood by those skilled in the art of the present invention. When definitions of the terms in this specification conflicts with the meaning generally understood by those skilled in the art of the present invention, the definitions described herein shall prevail.

The invention is exemplified by the following examples. However, it should be understood that the scope of the invention is not limited by these examples.

**Description of drawings**

The invention will be exemplarily described below with reference to the drawings:

Fig. 1 shows a mold and a process flow for the method for preparing a pultruded polyurethane composite by a pultrusion process according to an embodiment of the present invention, wherein: 1 and 2 represent fibers; 3 represents a yarn guiding device; 4 represents an impregnation device; 5 represents a mold; 6 represents a profile; 7 represents a drawing device; 8 and 9 represent a heating device.

**Examples**

Description of tested performance parameters in the examples of the present application:

**Functionality** refers to a value determined according to the formula in the industry: functionality = hydroxyl value * molecular weight / 56100; wherein the molecular weight is determined by GPC high performance liquid chromatography;

**Isocyanate index** refers to a value determined by the following formula:

$$\mathrm{Isocyanateindex}(\%) = \frac{\mathrm{Molesofisocyanategroups(NCOgroups)incomponentA}}{\mathrm{MolesofgroupsreactivetowardisocyanategroupsincomponentB}} \mathrm{Xd}$$

**NCO content** refers to the content of NCO groups in the system and is measured according to GB/T 12009.4-2016.

**Pultrusion rate/speed,** i.e. the speed at which the fiber reinforceing materials are drawn through the mold, refers to the length of the fiber reinforcing materials pultruded through the mold per minute, i.e. the length of the pultruded product produced per minute. In the test, a speed sensor or a stopwatch and a ruler are used. The pultrusion rate/speed, i.e. the length passing through the mold per unit time, is obtained as the measured length of the pultruded fiber reinforcing materials divided by the time used.

**Curing time** refers to a period of time that begins when the component A and the component B of the reaction system start to mix and ends when it is cured.

**Gel time** refers to a period of time that begins when the component A and the component B of the reaction system start to mix and ends when the viscosity reaches a certain value (for example, about 10000 mPa·s). The gel time of the present invention is tested using a gel time tester. In the test, the component A and the component B are mixed uniformly and then placed in the gel time tester. The gel time is recorded as a period of time that begins when the power button is pressed and ends when the gel time tester stops working.

**Source of raw materials and description thereof**

Table 1 - List of raw materials

| Material / device | Specification / type | Supplier |
|---|---|---|
| Isocyanate 1 | Desmodur1511L | Covestro Polymers (China) Co., Ltd. |
| Isocyanate 2 | Desmodur 0223 (with free radical initiator) | Covestro Polymers (China) Co., Ltd. |
| Polyol composition 1 | Baydur 18BD001 (without component b2)) | Covestro Polymers (China) Co., Ltd. |
| Polyol composition 2 | Baydur 18BD207 (with component b2)) | Covestro Polymers (China) Co., Ltd. |
| Internal mold releasing agent | Baydur 18BD101 | Covestro Polymers (China) Co., Ltd. |
| Glass fiber | PS 4100-2400Tex | Owens Corning Composites (China) Co., Ltd. |
| Pultrusion machine | Crawler pultrusion machine for composites | Nanjing Nuoertai Compound Materials Equipment Manufacturing Co., Ltd. |
| Injection device | Hydraulic Mini Link System | Magnum Venus Products |
| Gel time tester | GT-STHP-220 | Shanghai Senlan Scientific Instrument Co.,Ltd. |

Example 1:

As shown in Fig. 1, 240 bundles of glass fibers were taken out from the creel and passed sequentially through the preformed plates into the injection box and the mold (length of the mold was 40 cm). Then, the glass fibers were drawn forward by the drawing device until they were straightened. The heating device of the mold was turned on. The mold temperature was set at the inlet and the outlet to 120°C/220°C. After the temperature was stable, the injection device was turned on. The component A (Desmodur 0223) and the component B (100 parts by weight of Baydur 18BD207 and 3 parts by weight of Baydur 18BD101) were continuously pumped by the injection device into the static mixing head of the injection box in a weight ratio of 92:100. The injection box was fully filled with the components after they were mixed by the static mixing head. The glass fibers were fully impregnated. The injection pressure in the injection box was set to 0.1 to 15 bar. The glass fibers impregnated by the injection box was continuously pulled by the drawing device through the mold at a speed of 0.4 m/min to obtain a pultruded polyurethane composite. When the pultruded polyurethane composite was knocked using a metal piece at 1 m from the outlet of the mold, the sound was clear, indicating that the curing was well.

The polyurethane composition of Example 1 had a cure time of about 40 seconds and a gel time of 40 minutes.

Comparative Example 1:

As shown in Fig. 1, 240 bundles of glass fibers were taken out from the creel and passed sequentially through the preformed plates into the injection box and the mold (length of the mold was 40 cm). Then, the glass fibers were drawn forward by the drawing device until they were straightened. The heating device of the mold was turned on. The mold temperature was set at the inlet and the outlet to 120°C/190°C. After the temperature was stable, the injection device was turned on. The component A (Desmodur 1511L) and the component B (100 parts of Baydur 18BD001 and 5 parts of Baydur18BD101) were continuously pumped by the injection device into the static mixing head in a weight ratio of 114:100. The injection box was fully filled with the components, after they were mixed by the static mixing head. The fiber yarns were fully impregnated. The injection pressure in the injection box was set to 0.1 to 15 bar. The fiber yarns impregnated by the injection box was continuously pulled by the drawing device through the mold at a speed of 0.4 m/min. When the profile was knocked using a metal piece at 1 m from the outlet of the mold, the sound was dull, indicating that the curing was poor.

The polyurethane composition of Comparative Example 1 had a cure time of about 70 seconds and a gel time of about 23 minutes.

It can be seen from the experimental results of Example 1 and Comparative Example 1 as above that the method for preparing a pultruded polyurethane composite using a suitable mold and a corresponding polyurethane composition of the present invention allows producing a well-cured pultruded polyurethane composite. The use of short molds improves the production efficiency, saves costs and energy and protects the environment. When the same mold

was used, pultrusion of a polyurethane composition without the component b2) in the prior art could not provide a well-cured pultruded composite. In addition, the polyurethane composition of the present invention has a shorter curing time and a longer gel time, and can be better and more flexibly suitable for producing polyurethane composites, especially large polyurethane composites (for example, it can be impregnated and formed for longer time).

While the invention has been described in detail as above for the purposes of the present invention, it is understood that the detailed description is only exemplary. In addition to the contents defined by the claims, various changes can be made by those skilled in the art without departing from the spirit and scope of the invention.

## Claims

1. A method for preparing a pultruded polyurethane composite by a polyurethane pultrusion process, comprising the steps of:

    impregnating a fiber reinforcing material with a polyurethane composition comprising the following components:

    a component A, including one or more organic polyisocyanates;
    a component B, including:

    b1) one or more organic polyols in an amount of 21 to 60 wt%, preferably 21 to 40 wt%, based on the total weight of the polyurethane composition as 100 wt%;
    b2) one or more compounds having a structure of formula (I)

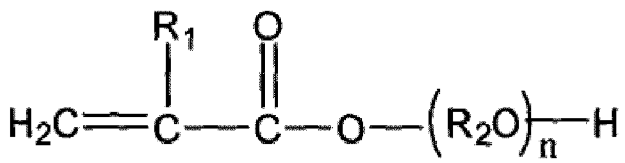

I

    wherein R1 is selected from the group consisting of hydrogen, methyl or ethyl; R2 is selected from the group consisting of an alkylene group having 2 to 6 carbon atoms, 2,2-di(4-phenylene)-propane, 1,4-di(methylene)benzene, 1,3-di(methylene)benzene, 1,2-di(methylene)benzene; n is an integer selected from 1 to 6; and

    a component C, free radical initiator;

    drawing the impregnated fiber reinforcing material at a speed of 0.2 to 2 m/min, preferably 0.4 to 1.5 m/min through a mold having a length of 21 to 55 cm, preferably 25 to 55 cm, more preferably 30 to 50 cm and a controlled temperature of 110 to 230°C, preferably 150 to 220°C, curing to form the pultruded polyurethane composite.

2. The method as claimed in claim 1, wherein the component b2) is selected from the group consisting of hydroxyethyl methacrylate, hydroxypropyl methacrylate, hydroxybutyl methacrylate, hydroxyethyl acrylate, hydroxypropyl acrylate, hydroxybutyl acrylate or combinations thereof.

3. The method as claimed in claim 1 or 2, wherein b2) is present in an amount of 4.6 to 33 wt%, based on the total weight of the polyurethane composition as 100 wt%.

4. The method as claimed in claim 1 or 2, wherein the fiber reinforcing material is selected from the group consisting of glass fiber, carbon fiber, polyester fiber, natural fiber, aramid fiber, nylon fiber, basalt fiber, boron fiber, silicon carbide fiber, asbestos fiber, whisker, hard particle, metal fiber or combinations thereof.

5. The method as claimed in claim 1 or 2, wherein the polyurethane composition has a curing time of 10 to 120 seconds, preferably from 15 to 90 seconds, at 150 to 220°C.

6. The method as claimed in claim 1 or 2, wherein the polyurethane composition has a gel time of 15 to 90 minutes, preferably 20 to 60 minutes, at room temperature.

7. The method as claimed in claim 1 or 2, wherein said impregnating is carried out in an impregnation device comprising an injection box and an open impregnation tank.

8. The method as claimed in claim 6, wherein the injection pressure in the injection box is 0.1 to 15 bar, preferably 0.1 to 10 bar.

9. A pultruded polyurethane composite obtained by the method for preparing a polyurethane composite by a polyurethane pultrusion process as claimed in any one of claims 1 to 8.

10. The pultruded polyurethane composite as claimed in claim 9, wherein the pultruded polyurethane composite is obtained by reaction of a polyurethane composition comprising the following components:

a component A, including one or more polyisocyanates;
a component B, including:

b1) one or more polyols in an amount of 21 to 60 wt%, preferably 21 to 40 wt%, based on the total weight of the polyurethane composition as 100 wt%;
b2) one or more compounds having a structure of formula (I)

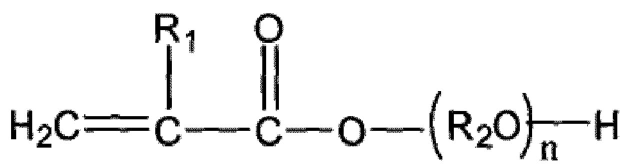

I

wherein R1 is selected from the group consisting of hydrogen, methyl or ethyl; R2 is selected from the group consisting of an alkylene group having 2 to 6 carbon atoms, 2,2-di(4-phenylene)-propane, 1,4-di(methylene)benzene, 1,3-di(methylene)benzene, 1,2-di(methylene)benzene; n is an integer selected from 1 to 6; and

a component C, including free radical initiator.

11. The pultruded polyurethane composite as claimed in claim 9 or 10, wherein b2) is present in an amount of 4.6 to 33 wt%, based on the total weight of the polyurethane composition as 100 wt%.

12. The pultruded polyurethane composite as claimed in claim 9 or 10, wherein the polyurethane composition has a curing time of 10 to 120 seconds, preferably from 20 to 90 seconds, at 150 to 220°C.

13. The pultruded polyurethane composite as claimed in claim 9 or 10, wherein the polyurethane composition has a gel time of 15 to 90 minutes, preferably 20 to 60 minutes, at room temperature.

14. A polyurethane product comprising the pultruded polyurethane composite obtained by the method for preparing a polyurethane composite by a polyurethane pultrusion process as claimed in any one of claims 1 to 8.

15. The polyurethane product as claimed in claim 14, selected from the group consisting of cable trays, curtain wall frames for doors and windows, ladder frames, tent poles or tubes, anti-glare panels, floors, sucker rods, electric poles and crossarms, guardrails, grids, profiles for construction, profiles and plates for container, bicycle frames, fishing rods, cable cores, insulator core rods, radomes, single or sandwich continuous plates or spar caps for wind turbine blades.

Fig. 1

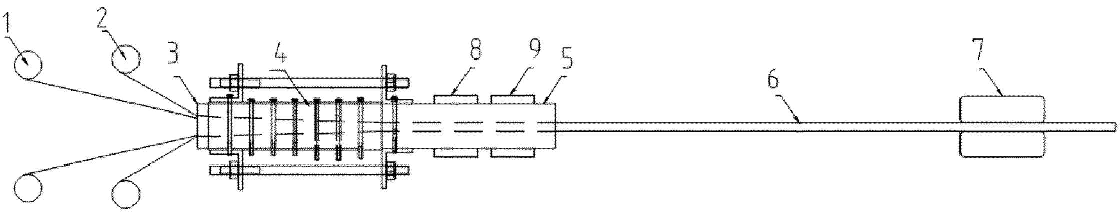

Europäisches Patentamt
European Patent Office
Office européen des brevets

# EUROPEAN SEARCH REPORT

Application Number
EP 19 17 2172

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | WO 2018/097874 A1 (DOW GLOBAL TECHNOLOGIES LLC [US]) 31 May 2018 (2018-05-31)<br>* paragraph [0048]; claim 9 *<br>* paragraph [0050] *<br>* page 18 - page 20; claims 2, 4; example 3; table 1 *<br>* paragraph [0079]; claim 3 *<br>* paragraph [0004] - paragraph [0008] * | 2-8<br>1<br>9-15 | INV.<br>C08G18/76<br>C08G18/67<br>C08G18/42<br>C08G18/44<br>C08G18/48<br>C08L75/16<br>C08J5/04<br>C08F220/20 |
| X<br>A | WO 2018/219756 A1 (COVESTRO DEUTSCHLAND AG [DE]) 6 December 2018 (2018-12-06)<br>* page 14 - page 15; example 1; table 1 *<br>* page 12, line 13 - line 34 * | 9-15<br>1-8 | |
| Y<br>A | US 2002/045690 A1 (CHEOLAS EVAN H [US] ET AL) 18 April 2002 (2002-04-18)<br>* example 18 * | 1<br>2-15 | |
| | | | TECHNICAL FIELDS SEARCHED (IPC) |
| | | | C08G<br>C08L<br>C08J<br>C08F |

The present search report has been drawn up for all claims

1

| Place of search | Date of completion of the search | Examiner |
|---|---|---|
| Munich | 12 August 2019 | Ojea Jimenez, Isaac |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 17 2172

This annex lists the patent family members relating to the patent documents cited in the above-mentioned European search report. The members are as contained in the European Patent Office EDP file on
The European Patent Office is in no way liable for these particulars which are merely given for the purpose of information.

12-08-2019

| Patent document cited in search report | Publication date | Patent family member(s) | Publication date |
|---|---|---|---|
| WO 2018097874 A1 | 31-05-2018 | KR 20190089007 A | 29-07-2019 |
| | | WO 2018097874 A1 | 31-05-2018 |
| WO 2018219756 A1 | 06-12-2018 | CN 108929426 A | 04-12-2018 |
| | | WO 2018219756 A1 | 06-12-2018 |
| US 2002045690 A1 | 18-04-2002 | AR 023704 A1 | 04-09-2002 |
| | | AU 760158 B2 | 08-05-2003 |
| | | BR 9915380 A | 31-07-2001 |
| | | CA 2359560 A1 | 25-05-2000 |
| | | CN 1326476 A | 12-12-2001 |
| | | EP 1131369 A1 | 12-09-2001 |
| | | JP 2002530445 A | 17-09-2002 |
| | | TW 482780 B | 11-04-2002 |
| | | US 2002045690 A1 | 18-04-2002 |
| | | WO 0029459 A1 | 25-05-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 101341018 B
- CN 106626445 A
- CN 101312999 B


### Non-patent literature cited in the description


- Makromolekulare Stoffe. Houben Weyl, Methoden der Organischen Chemie. Georg Thieme Verlag, 1963, vol. XIV/2, 17
- **LIU YIJUN.** Handbook of Polyurethane Raw Materials and Auxiliaries. 01 April 2005
- **LIU HOUZHEN.** Polyurethane Elastomer. August 2012